# EUROPEAN PATENT APPLICATION

(11) **EP 2 405 652 A1**
(43) Date of publication of application: **11.01.2012**
(21) Application number: 09841020.2
(22) Date of filing: 03.12.2009
(51) Int. Cl.: H04N 7/173

(54) **METHOD AND DEVICE FOR REDUCING INTERRUPTION TIME OF INTERNET PROTOCOL TELEVISION MULTICAST STREAM**

(30) Priority: 02.03.2009 CN 200910078722
(71) Applicant: ZTE Corporation, Shenzhen, Guangdong 518057 (CN)
(72) Inventor: ZHANG, Junjian, Shenzhen Guangdong 518057 (CN); WANG, Zhanli, Shenzhen Guangdong 518057 (CN); GAO, Jianying, Shenzhen Guangdong 518057 (CN)
(74) Representative: Jansen, Cornelis Marinus
(86) International application number: PCT/CN2009/075282
(87) International publication number: WO 2010/099687

(57) **Abstract**

The present invention discloses a method for reducing interruption time of an internet protocol television multicast stream, comprising the steps of: after the kernel of a home access gateway is restarted, detecting whether the network port connected to the access equipment side is started; when started, sending an Internet Group Management Protocol (IGMP) query command to the access equipment through the network port; then establishing a multicast forwarding table which is from the home access gateway to the access equipment according to the identification information of the access equipment which responds to the internet group management protocol query command, and then reporting the multicast forwarding table to an internet group management protocol multicast source. The present invention further discloses a device for implementing the method above. The present invention can reduce the interruption time of the internet protocol television multicast stream, improve the Quality of Service (QoS) of the IPTV system, and be implemented simply.

## Description

### TECHNICAL FIELD

The present invention relates to a processing method and device for an access equipment accessing to internet protocol television network when a home gateway is restarted.

### BACKGROUND

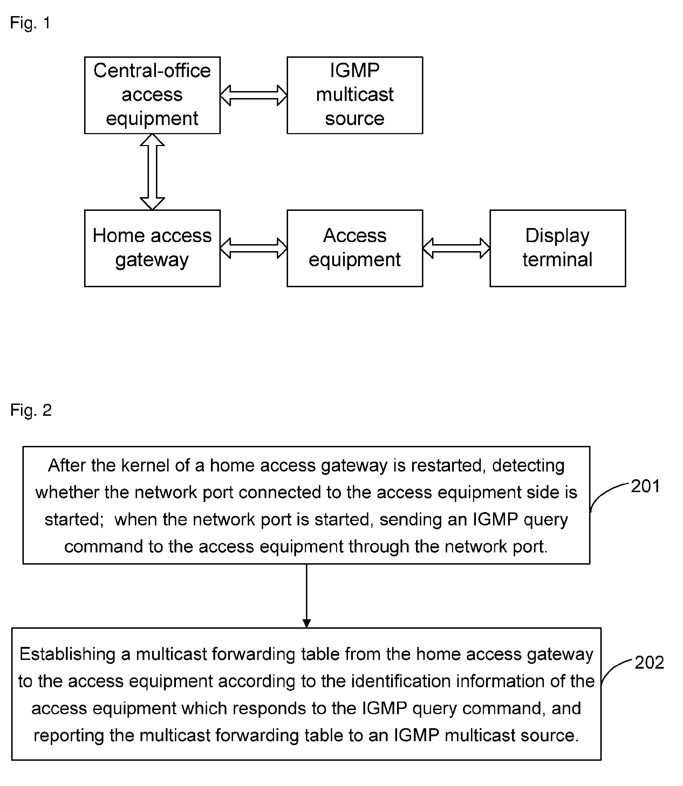

The development of broadband provides a telecommunication network operator with a great opportunity for implementing digital multicast services, including video, game and electronic commerce and so on. In order to cater for this opportunity, it is necessary for the telecommunication operator to construct an efficient broadband network value-added service platform which is capable of providing users with a simple and efficient bridge for receiving services. Internet Protocol Television (IPTV) service, as a value-added service, already possesses good market conditions. Fig. 1 is a schematic diagram illustrating structure composition of an IPTV system, as shown in Fig. 1, the IPTV system comprises an Internet Group Management Protocol (IGMP) multicast source, a central-office access equipment, a home access gateway, an access equipment and a display terminal and so on, wherein the home access gateway accesses to the internet through the central-office access equipment, and links to the IGMP multicast source through the central-office access equipment to receive an IPTV service from the IGMP multicast source and forwards the IPTV service to the access equipment; then the display terminal obtains the IPTV data to be displayed from the access equipment and displays it. The IPTV system is implemented on a basis of mature multicast technology and IGMP; the access equipment generally accesses to the home access gateway through technologies such as a Digital Subscriber Line (DSL) and a Passive Optical Network (PON), ,the home access gateway controls the forwarding of data and forwards the processed data message to the display terminal connected to the access equipment (such as a set top box and the like), then the display terminal displays the corresponding images to a user. On condition that the access equipment per se is provided with a display function, for example, when the access equipment is a Personal Computer (PC), the display terminal may be not needed.

The telecommunication operator performs unified maintenance and management for a home access gateway, including distributing electronic work order, updating software version and so on, wherein some maintenance and management can only be implemented with the home access gateway restarted, however, the restart of the home access gateway will inevitably cause an interruption of an IPTV multicast stream between the access equipment and IGMP multicast source, and sequentially bring to the users receiving IPTV real-time broadcast an negative effect, such as frozen screen, blank screen and so on, thereby resulting in a poor user experience and a deterioration of Quality of Service (QoS) of the IPTV system.

### SUMMARY

In view of the problem above, the present invention is disclosed mainly to provide a method and device for reducing interruption time of an internet protocol television multicast stream, capable of reducing interruption time of the internet protocol television multicast stream and improving the QoS of an IPTV system.

To achieve the purpose above, the technical solution of the present invention is realized in the following way:
a method for reducing interruption time of an internet protocol television multicast stream, comprises the steps of:
   after the kernel of a home access gateway is restarted, detecting whether a network port connected to an access equipment side is started; when the network port is started, sending an Internet Group Management Protocol (IGMP) query command to the access equipment through the network port; then establishing a multicast forwarding table which is from the home access gateway to the access equipment according to identification information of the access equipment included in a response message of the internet group management protocol query command, and reporting the multicast forwarding table to an internet group management protocol multicast source.

Preferably, the method may further comprise a step that:
after receiving the multicast forwarding table, the internet group management protocol multicast source updates the local multicast forwarding table of the home access gateway and the access equipment thereof, and then forwards an internet protocol television multicast stream to the access equipment through the home access gateway.

Preferably, the identification information of the access equipment may include information of the MAC address and IP address of the access equipment.

Preferably, the access equipment may include a set top box, a personal computer and a digital video player.

A device for reducing interruption time of an internet protocol television multicast stream, comprises:
a detecting unit, arranged for detecting whether a network port connected to an access equipment side is started after the kernel of a home access gateway is restarted, and triggering a sending unit when the network port is started;
a sending unit, arranged for sending an IGMP query command to the access equipment of the home access gateway through the network port;
a multicast forwarding table establishment unit, arranged for establishing a multicast forwarding table from the home access gateway to the access equipment according to identification information of the access equipment included in a response message of the internet group management protocol query command, and
a multicast forwarding table reporting unit, arranged for reporting the multicast forwarding table to an internet group management protocol multicast source.

Preferably, after receiving the multicast forwarding table, the internet group management protocol multicast source may update a local multicast forwarding table, and then forward an internet protocol television multicast stream to a corresponding access equipment through the home access gateway according to the updated multicast forwarding table.

Preferably, the identification information of the access equipment may include information of the MAC address and IP address of the access equipment.

Preferably, the access equipment may include a set top box, a personal computer and a digital video player.

In the present invention, an IGMP query command is set in the home access gateway and is sent to an access equipment (such as a set top box) after detecting that the network port connected to the access equipment side is started when the home access gateway is restarted; then the access equipment responds to the received IGMP query command; according to the response from the access equipment, the home access gateway determines a multicast forwarding table from the home access gateway to the access equipment and reports the multicast forwarding table to an IGMP multicast source, then the IGMP multicast source updates the local multicast forwarding table of the home access gateway and the access equipment connected therewith according to the received multicast forwarding table and forwards an IPTV multicast stream to the access equipment connected to the IGMP multicast source through the home access gateway. Since the multicast forwarding table of the access equipment is determined and reported to an IGMP multicast source after the network port connected to the access equipment side is started, the IGMP multicast source, after configuration of the application on the home access gateway is completed, can forward an IPTV multicast stream to the access equipment through the home access gateway, thereby reducing the interruption time of the IPTV multicast stream. The present invention can be implemented simply with a low cost.

### BRIEF DESCRIPTION OF THE DRAWINGS

Fig. 1 is a schematic diagram illustrating structure composition of an IPTV system;
Fig. 2 is a flowchart illustrating a method for reducing interruption time of an internet protocol television multicast stream according to the present invention; and
Fig. 3 is a schematic diagram illustrating structure composition of a device for reducing interruption time of an internet protocol television multicast stream according to the present invention.

### DETAILED DESCRIPTION OF THE INVENTION

The basic idea of the present invention is that: an IGMP query command is set in the home access gateway and is sent to an access equipment (such as a set top box) after detecting that the network port connected to the access equipment side is started when the home access gateway is restarted; then the access equipment responds to the received IGMP query command; according to the response from the access equipment, the home access gateway determines a multicast forwarding table which is from the home access gateway to the access equipment and reports the multicast forwarding table to an IGMP multicast source, then the IGMP multicast source updates the local multicast forwarding tables of the home access gateway and the access equipment connected thereto according to the received multicast forwarding table and forwards an IPTV multicast stream to the access equipment links to the IGMP multicast source through the home access gateway. Since the multicast forwarding table of the access equipment is determined and reported to the IGMP multicast source after the network port connected to the access equipment side is started, thus the IGMP multicast source, after configuration of application on the home access gateway is completed, can forward an IPTV multicast stream to the access equipment through the home access gateway, thereby reducing the interruption time of the IPTV multicast stream. The present invention is implemented simply and is easy to operate and maintain.

For a better understanding of the purpose, technical solution and advantages of the present invention, embodiments are provided hereinafter to illustrate the present invention in detail with reference to accompanying drawings.

Fig. 2 is a flowchart illustrating a method for reducing interruption time of an internet protocol television multicast stream according to the present invention, as shown in Fig. 2, the method for reducing interruption time of the internet protocol television multicast stream according to the present invention comprises the following steps.

Step 201: detecting whether the network port connected to the access equipment side is started after a kernel of a home access gateway is restarted; sending an IGMP query command to the access equipment through the network port when the network port is started.

After the telecommunication operator performs a maintenance and management of program update for the home access gateway, the home access gateway is restarted; during the restarting process, the kernel of the home access gateway is started firstly, that is, the operating system of the home access gateway is to be started after the kernel of the home access gateway loads the data in the registry; then the application program supported by the operating system are to be started. In the current IPTV system, during the restarting process of the home access gateway, the multicast forwarding table from the home access gateway to the access equipment is cleared in the home access gateway, all the multicast packets will be discarded by the home access gateway; the IPTV multicast stream from the home access gateway to the access equipment will be recovered only after all the application programs are started. Due to a relative long loading time of application programs, even though the loading of the application programs in the home access gateway is completed, it is necessary for the IGMP multicast source to send an IGMP query command to the home access gateway to query for an access equipment which currently can receive the IPTV multicast stream, that is, to determine the currently activated access equipment, so as to determine a multicast forwarding table; therefore, the IPTV multicast stream from the IGMP multicast source to the access equipment is completely cut off, and consequently the display terminal for displaying images through the access equipment will have a blank screen or a frozen screen. Based on the explanation above, the interruption of the IPTV multicast stream would take a relative long time.

In the present invention, an IGMP query command is set and performed in the home access gateway, after the network interface connected to the access equipment is started, the IGMP query command is sent to the access equipment so as to obtain the information of the access equipment which currently can receive an IPTV multicast stream, such that the IPTV multicast stream can be sent to the access equipment in the first period of time after the function of the home access gateway is recovered; after receiving the IGMP query command, the access equipment will respond to the IGMP query command by an IGMP report message (a response message of the IGMP query command). Generally, there is a plurality of access equipments connected to the home access gateway; after receiving the IGMP query command, each access equipment responds an IGMP report message. The specific formats of the IGMP query command and the IGMP report message refers to the related specification in IGMP, no further description is repeated here.

The network interface connected to the access equipment is started before the application program of the home access gateway are started; therefore, it is not necessary for the home access gateway, after the application program of the home access gateway are completely started, to send an IGMP query command to the access equipment; after the kernel of the home access gateway is started, a detection is performed on the network interface connected to the access equipment; once the network interface connected to the access equipment is started, the IGMP query command is sent out.

In the present invention, the access equipment can be a PC, a Set Top Box (STB), a digital video player and so on; when the access equipment is a terminal with digital video processing capability, such as a PC or a digital video player, no display terminal is needed, because this kind of access equipment itself can achieve an output of video.

Step 202: establishing a multicast forwarding table which is from the home access gateway to the access equipment according to the identification information of the access equipment which responds to the IGMP query command, and reporting the multicast forwarding table to the IGMP multicast source.

After receiving the IGMP report message from the access equipment, the home access gateway establishes a multicast forwarding table which is from the home access gateway to the access equipment according to identification information of the access equipment, such as the information of the MAC address and IP address and other information, included in the IGMP report message; after establishment is completed, the central-office access equipment sends the multicast forwarding table to the IGMP multicast source via the network interface connected to the central-office access equipment; after receiving the multicast forwarding table, the IGMP multicast source updates the local multicast forwarding table of the home access gateway and the access equipment thereof and forwards the IPTV multicast stream to the access equipment through the home access gateway.

When the home access gateway is restarted, the kernel of the home access gateway is first to be restarted and performs a detection on the network interface connected to the access equipment; after the network interface connected to the access equipment is started, an IGMP query command is sent to the access equipment connected to the home access gateway, and then a multicast forwarding table of the home access gateway and the access equipment thereof is established according to the IGMP report message responded from the access equipment; therefore, the IPTV multicast stream of the access equipment can be recovered immediately after the application programs of the home access gateway are started.

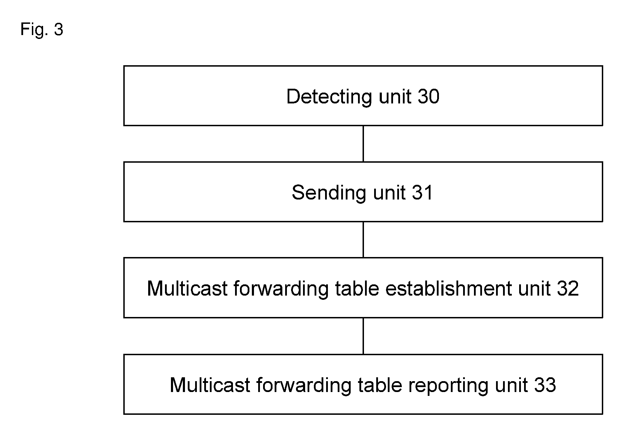

Fig. 3 is a schematic diagram illustrating structure composition of a device for reducing interruption time of an internet protocol television multicast stream according to the present invention, as shown in Fig. 3, the device for reducing interruption time of the internet protocol television multicast stream according to the present invention comprises a detecting unit 30, a sending unit 31, a multicast forwarding table establishment unit 32 and a multicast forwarding table reporting unit 33, wherein the detecting unit 30 is arranged, after the kernel of a home access gateway is restarted, for detecting whether the network port connected to the access equipment side is started; when the network port is started, a sending unit 31 is triggered; the sending unit 31 is arranged for sending an IGMP query command to the access equipment connected to the home access gateway through the network port connected to the access equipment; the multicast forwarding table establishment unit 32 is arranged for establishing a multicast forwarding table from the home access gateway to the access equipment according to the identification information of the access equipment included in the response message of the IGMP query command, wherein the access equipment responds to IGMP query command by an IGMP report message; the identification information of the access equipment includes the information of MAC address and IP address and other information of the access equipment; the multicast forwarding table reporting unit 33 is arranged for reporting the multicast forwarding table to the IGMP multicast source; after receiving the multicast forwarding table, the IGMP multicast source updates the local multicast forwarding table, and then forwards an internet protocol television multicast stream to the corresponding access equipment through the home access gateway according to the updated multicast forwarding table, wherein the access equipment includes a set top box, a personal computer and a digital video player and so on.

Those skilled in the art should understand that the device for reducing interruption time of the internet protocol television multicast stream according to the present invention is designed for the method for reducing interruption time of the internet protocol television multicast stream as shown in Fig. 2; the implementation function of each processing unit in the device shown in Fig. 3 can be understandable with reference to the description of the method shown in Fig. 2. The function of each unit in the device for reducing interruption time of the internet protocol television multicast stream according to the present invention can be realized by the programs run on a processor or by a specific logic circuit.

The above are only the preferred embodiments of the present invention and not intended to limit the protection scope of the present invention.

## Claims

1. A method for reducing interruption time of an internet protocol television multicast stream, comprising:
detecting whether a network port connected to an access equipment side is started after a kernel of a home access gateway is restarted; sending an Internet Group Management Protocol (IGMP) query command to the access equipment through the network port when the network port is started; then establishing a multicast forwarding table which is from the home access gateway to the access equipment according to identification information of the access equipment included in a response message of the IGMP query command, and reporting the multicast forwarding table to an IGMP multicast source.

2. The method according to claim 1, further comprising:
updating a local multicast forwarding table by the IGMP multicast source after receiving the multicast forwarding table, and then forwarding an internet protocol television multicast stream to a corresponding access equipment through the home access gateway according to the updated multicast forwarding table.

3. The method according to claim 1 or 2, wherein the identification information of the access equipment includes information of a MAC address and an IP address of the access equipment.

4. The method according to claim 3, wherein the access equipment includes a set top box, a personal computer and a digital player.

5. A device for reducing interruption time of an internet protocol television multicast stream, comprising:
a detecting unit, arranged for detecting whether a network port connected to an access equipment side is started after a kernel of a home access gateway is restarted, and triggering a sending unit when the network port is started;
a sending unit, arranged for sending an Internet Group Management Protocol (IGMP) query command to the access equipment of the home access gateway through the network port;
a multicast forwarding table establishment unit, arranged for establishing a multicast forwarding table which is from the home access gateway to the access equipment according to identification information of the access equipment included in a response message of the IGMP query command; and
a multicast forwarding table reporting unit, arranged for reporting the multicast forwarding table to an IGMP multicast source.

6. The device according to claim 5, wherein after receiving the multicast forwarding table, the IGMP multicast source is arranged for updating a local multicast forwarding table, and then forwarding an internet protocol television multicast stream to a corresponding access equipment through the home access gateway according to the updated multicast forwarding table.

7. The device according to claim 5 or 6, wherein the identification information of the access equipment includes information of a MAC address and an IP address of the access equipment.

8. The device according to claim 7, wherein the access equipment includes a set top box, a personal computer and a digital video player.
